# EUROPÄISCHE PATENTSCHRIFT

(11) **EP 2 585 518 B1**
(45) Veröffentlichungstag und Bekanntmachung des Hinweises auf die Patenterteilung: **01.03.2017**
(21) Anmeldenummer: 11732370.9
(22) Anmeldetag: 22.06.2011
(51) Int. Cl.: C08K 3/00

(54) **INTUMESZIERENDES SPRITZGUSSMATERIAL UND DARAUS HERGESTELLTER FORMKÖRPER, INSBESONDERE BRANDSCHUTZ-LÜFTUNGSGITTER**
INTUMESCENT INJECTION MOULDING MATERIAL AND THUS PRODUCED MOULDED BODY, IN PARTICULAR FIREPROOF VENTILATION GRID
MATIÈRE DE MOULAGE PAR INJECTION INTUMESCENTE ET CORPS MOULÉ RÉALISÉ À PARTIR DE CELLE-CI, NOTAMMENT GRILLE D'AÉRATION PARE-FEU

(30) Priorität: 21.06.2011 DE 202011050518 U; 23.06.2010 DE 202010009459 U
(43) Veröffentlichungstag der Anmeldung: 01.05.2013
(73) Patentinhaber: Promat GmbH, 4021 Linz (AT)
(72) Erfinder: GAUCH, Edwin, A-4021 Linz (AT); LÜDECKE, Bernhard, 4060 Leonding (AT); RAAB, Michael, 4020 Linz (AT)
(74) Vertreter: Ring & Weisbrodt
(86) Internationale Anmeldenummer: PCT/EP2011/003087
(87) Internationale Veröffentlichungsnummer: WO 2011/160832

(56) Entgegenhaltungen:
- WO-A1-01/88029
- DE-A1-102006 061 991
- DE-U1-202010 009 459

## Beschreibung

Die vorliegende Erfindung betrifft eine intumeszierende Zusammensetzung, enthaltend ein polymeres Bindemittel, expandierbaren Graphit (Blähgraphit) und zumindest einen anorganischen Füllstoff sowie einen intumeszierenden Formkörper, welcher mittels Spritzgießen einer solchen Zusammensetzung hergestellt ist, insbesondere ein Lüftungsgitter zur Verhinderung des Durchtritts von Feuer und Rauch im Brandfall aus einem Raum in einen anderen.

Zusammensetzungen der eingangs genannten Art sind aus dem Stand der Technik bekannt. So ist beispielsweise in der DE 100 24 421 A1 eine flammwidrige intumeszierende Mischung offenbart, die ein aus Ethylen, Vinylacetat und gegebenenfalls weiteren Monomeren herstellbares Polymer mit einem Vinylacetatgehalt von 40 bis 85 Gew.-% aufweist. Die Mischung enthält zudem expandierbaren Graphit, einen mineralischen Füllstoff und gegebenenfalls weitere Additive. Die hier beschriebene Mischung wird zur Herstellung von Formkörpern verwendet, wobei der Formgebungsprozess über Extrusion, Kalandrieren oder Pressformung erfolgt.

Bei solchen Mischungen wird es teilweise als nachteilig empfunden, dass zwar dimensionsstabile Formkörper herstellbar sind, wobei diese jedoch nur über die genannten Formgebungsverfahren hergestellt werden können. Dies liegt daran, dass aufgrund der gewünschten Festigkeit der Formkörper die Mischung ebenfalls verhältnismäßig hart ist. Dieses Problem kann nicht durch eine Erhöhung der Verarbeitungstemperatur umgangen werden, da dann der Blähgraphit über seine Auslöse-Temperatur ("onset-Temperatur") erhitzt und somit bereits während der Herstellung reagieren würde. Letztlich ist somit die Formenvielfalt der mit einer derartigen Mischung herstellbaren Körper durch die vorliegend genannten Formgebungsverfahren limitiert. Insbesondere feinere Strukturen lassen sich kaum oder nur unter erheblichem Aufwand herstellen. Zudem sind die Produktionstaktzeiten verhältnismäßig lang.

Die der vorliegenden Erfindung zugrunde liegende Aufgabe bestand also darin, eine intumeszierende Zusammensetzung zur Verfügung zu stellen, die sich einfacher formgebend verarbeiten lässt und mit der vor allem komplexere und filigranere Strukturen gefertigt werden können. Zudem wäre es wünschenswert, die Produktionszeiten für Formkörper aus solchen Zusammensetzungen zu verkürzen.

Diese Aufgabe wird gelöst durch eine intumeszierende Zusammensetzung, enthaltend ein polymeres Bindemittel, expandierbaren Graphit (Blähgraphit) sowie zumindest einen anorganischen Füllstoff, wobei die Zusammensetzung dadurch gekennzeichnet ist, dass sie spritzgießbar ist und das polymere Bindemittel ein thermoplastisches Polymer mit einem Erweichungspunkt von 160°C oder weniger aufweist.

Der Erfindung liegt die Erkenntnis zugrunde, dass durch den Einsatz von Thermoplasten mit einem maximalen Erweichungspunkt von 160°C solche Zusammensetzungen in einer Spritzgussanlage verarbeitet werden können. Auf diese Weise lassen sich auch komplexere Strukturen fertigen, wie beispielsweise Brandschutzgitter.

Andererseits zeichnet sich das erfindungsgemäß eingesetzte thermoplastische Polymer durch eine Erweichungstemperatur aus, die unterhalb der so genannten onset Temperatur des expandierbaren Graphits liegt, also derjenigen Temperatur ab der expandierbare Graphit beginnt sich aufzublähen. Auf diese Weise kann ein bereits teilweises Auslösen der intumeszierenden Komponente während der Herstellung von Formkörpern aus solchen Zusammensetzungen vermieden werden.

Zudem erlaubt die erfindungsgemäße Zusammensetzung aufgrund ihrer Spritzgusseignung die Herstellung von Formkörpern in der Massenfertigung, das heißt mit kurzen Taktzeiten und guter Reproduzierbarkeit.

Der Erweichungspunkt des thermoplastischen Polymers wird üblicherweise mittels dynamischer Differenzkalorimetrie (DSC) nach DIN EN ISO 111357-1, DIN 53 765 oder ASTM D 3418 bestimmt.

Der Erweichungspunkt beziehungsweise die Glasübergangstemperatur der erfindungsgemäß eingesetzten Bindemittel beträgt insbesondere ≤ 170°C. Der Erweichungspunkt oder aber auch die Glasübergangstemperatur (Tg) wird üblicherweise mittels dynamischer Differenzkalorimetrie (DSC) nach DIN EN ISO 111357-1, DIN 53 765 oder ASTM D 3418 bestimmt. Vorteilhafterweise besitzt das erfindungsgemäß verwendete thermoplastische Polymer beziehungsweise die Polymermischung einen Erweichungspunkt von wenigstens 50 °C, weiter bevorzugt von wenigstens 60 °C. Besonders bevorzugt liegt der Erweichungspunkt bei höchstens 160 °C, vorzugsweise bei höchstens 150 °C weiter bevorzugt bei höchstens 130 °C. Diese maximalen Erweichungspunkte gewährleisten, dass der im Brandfall aufschäumende Wirkstoff nicht bereits während der Verarbeitung aktiviert wird.

Zur Herstellung der intumeszierenden Zusammensetzung werden im einfachsten Fall die einzelnen Komponenten miteinander vermischt, wobei das thermoplastische Polymer zweckmäßigerweise als Granulat eingesetzt wird. Es ist jedoch ebenso möglich, das thermoplastische Polymer zunächst aufzuschmelzen und die übrigen Komponenten mit der Schmelze zu vermischen, was beispielsweise in einem Extruder erfolgen kann. Der Blähgraphit und der anorganische Füllstoff können unabhängig hiervon beispielsweise als Pulver und/ oder Granulat verwendet werden.

Es ist erfindungsgemäß vorgesehen, dass die Zusammensetzung expandierbaren Graphit enthält, der oft auch als Blähgraphit bezeichnet wird. Hierunter versteht man handelsübliche expandierbare Graphit-Intercalationsverbindungen. Bedingt durch die Schichtgitterstruktur von Graphit können Atome oder kleine Moleküle zwischen die Kohlenstoff-Schichten interkaliert, also eingelagert werden. Dadurch entsteht so genanntes Blähsalz oder GIC (Graphite Intercalation Compound). Hochwertige Blähgraphite weisen einen großen Anteil interkalierter Schichten auf. Unter Hitzeeinwirkung werden die Schichten durch Thermolyse ziehharmonikaartig auseinandergetrieben, wodurch die Graphitflocken expandieren. Je nach Sorte des Blähgraphits kann die Expansion bereits bei ca. 150°C einsetzen und nahezu schlagartig erfolgen. Bei freier Expansion kann das Endvolumen das Mehrhundertfache des Ausgangsvolumens erreichen.

Solche expandierbaren Graphit-Intercalationsverbindungen werden beispielsweise dadurch hergestellt, dass man Graphitteilchen in einer Lösung dispergiert, die ein Oxidationsmittel und die einzulagernde Verbindung enthält. Als Oxidationsmittel werden häufig Salpetersäure, Kaliumchlorat, Chromsäure, Kaliumpermanganat, Wasserstoffperoxid und dergleichen eingesetzt. Als einzulagernde Verbindung wird beispielsweise konzentrierte Schwefelsäure verwendet. Die Umsetzung findet bei Temperaturen von 60°C bis 130°C über einen Zeitraum von bis zu vier Stunden statt. Anschließend wird der Säureüberschuss abgetrennt, die in dem Festprodukt vorhandene restliche Säure durch mehrfaches Waschen mit Wasser entfernt und das Material anschließend getrocknet. Ein solcher Herstellungsprozess ist beispielsweise in der EP 0 085 121 B1 beschrieben.

Als blähfähiges Silikat kommen zum Beispiel Schichtsilikate, wie beispielsweise Vermiculit, zum Einsatz. Schichtsilikate sind aus Octaeder- und Tetraeder-Schichten aufgebaut, zwischen denen austauschbare Kationen, wie Magnesium-und Aluminium-Kationen eingelagert sind, deren Verhältnis je nach Herkunft des Schichtsilikats variiert. Aufgrund des Vorhandenseins von Zwischenschichtwasser unterliegen solche blähfähigen Schichtsilikate beim Erhitzen einer Expansion aufgrund spontaner Freisetzung des Zwischenschichtwassers. Dies führt zu einem Auseinanderdrängen der Schichten und damit zu einer Volumenvergrößerung. Die Temperatur, bei der dieser Expansionsvorgang einsetzt, wird als Onset-Temperatur bezeichnet, die bei nativem blähfähigem Vermiculit bei etwa 320°C liegt. In ähnlicher Weise wie beim Blähgraphit können auch bei Schichtsilikaten andere Verbindungen in die Zwischengitterschichten interkaliert werden, wodurch sich die Onset-Temperatur variieren und insbesondere zu niedrigeren Temperaturen verschieben lässt. Auf diese Weise lässt sich das Ansprechverhalten des intumeszierenden Materials an die Erfordernisse anpassen.

Als blähfähiges silikatisches Material können neben den Schichtsilikaten Natrium- bzw. Kaliumsilikate einzeln oder in Kombination eingesetzt werden. Diese werden üblicherweise in Form von Natrium- bzw. Kaliumwasserglas bei der Herstellung des erfindungsgemäßen Lüftungsgitters verwendet.

Die erfindungsgemäße Zusammensetzung kann 10 bis 85 Gew.-% an expandierbarem Graphit enthalten, insbesondere 20 bis 50 Gew.-%, jeweils bezogen auf die gesamte Zusammensetzung.

Um eine optimale Verarbeitbarkeit in einer Spritzgussanlage sicher zu stellen, sind die erfindungsgemäßen Zusammensetzungen vorteilhafterweise weitestgehend wasserfrei. Darunter wird im Sinne der vorliegenden Erfindung verstanden, dass der Anteil an freiem Wasser, also solches Wasser, welches nicht als Kristallwasser oder in Poren der Feststoffe eingelagert ist, weniger als 1 Gew.-% beträgt, insbesondere weniger als 0,5 Gew.-%.

Nach einer Weiterbildung der erfindungsgemäßen Zusammensetzung zeichnet sich das hierin verwendete thermoplastische Polymer durch einen Erweichungspunkt von 50 bis 150°C aus, insbesondere von 70 bis 140°C. Vorteilhafterweise besitzt das erfindungsgemäß verwendete thermoplastische Polymer beziehungsweise die Polymermischung einen Erweichungspunkt von wenigstens 50°C, weiter bevorzugt von wenigstens 60 °C. Besonders bevorzugt liegt der Erweichungspunkt bei höchstens 150°C, vorzugsweise bei höchstens 140°C weiter bevorzugt bei höchstens 130°C. Dies ist besonders vorteilhaft, da der Erweichungspunkt dieser Polymere unterhalb der onset Temperatur des expandierbaren Graphits liegt.

Weiter bevorzugt werden der Erweichungspunkt des thermoplastischen Polymers und die onset Temperatur des expandierbaren Graphits so aufeinander abgestimmt, das der Erweichungspunkt des thermoplastischen Polymers zumindest 10°C, insbesondere zumindest 15°C oder gar wenigstens 20°C oberhalb der onset-Temperatur des expandierbaren Graphits liegt.

Der Gehalt des thermoplastischen Polymers kann in weiten Bereichen variieren und je nach gewünschter Konsistenz der Zusammensetzung angepasst werden. Der Gehalt kann beispielsweise 10 bis 60 Gew.-%, insbesondere 30 bis 50 Gew.-% betragen, jeweils bezogen auf die gesamte Zusammensetzung.

Das thermoplastische Polymer kann aus einem einzigen Polymer oder aber auch aus einer Mischung unterschiedlicher Polymere bestehen. In einer solchen Mischung können auch an sich nicht thermoplastische Polymere verwendet werden, solange die Mischung insgesamt thermoplastische Eigenschaften behält.

Das erfindungsgemäß eingesetzte thermoplastische Polymer kann ausgewählt sein aus der Gruppe umfassend Polyolefine, wie Polyethylen, insbesondere (PE-HD (HDPE) ,PE-LD (LDPE),PE-LLD (LLDPE), PE-HMW, PE-UHMW), Polypropylen, ferner Polyurethane, Polyvinylacetate, Polyvinylether, Polyvinylpropionate, Polystyrole, natürliche oder synthetische Kautschuke, Silikone, Poly-(meth)acrylate und Homo- und Copolymere auf der Grundlage von (Meth)acrylaten, Acrylnitril, Vinylestern, Vinylethern, Vinylchlorid und/oder Styrol sowie Hybrid-Polymere, vorzugsweise solche auf der Grundlage von Polyethylenoxid und/oder Polypropylenoxid mit Dimethylsilyl-Endgruppen, Polymethacrylsäurealkylester, Polyacrylsäurealkylester, Polymethacrylsäurearylester), Polyacrylsäurearylester und/oder Copolymere hiervon mit n-Butylacrylat, Vinylacetat und/oder Styrol, des Weiteren Ethylen-Acrylsaeure-acrylat-Copolymere, Ethylen-Acrylsäure-Maleinsäureanhydrid, Ethylen-Butylacrylat-Copolymere, Ethylen-Buten-Copolymere, Ethylen-Ethylacetat-Copolymere, Ethylen-Methacrylsäureester-Copolymere, Ethylen-Methacrylsäure-Copolymere, Ethylen-Methylmethacrylat-Copolymere oder Mischungen von diesen Homo-, Co- beziehungsweise Terpolymeren.

In weiterer Ausgestaltung der erfindungsgemäßen Zusammensetzung beträgt der Anteil an anorganischem Füllstoff 0,1 bis 50 Gew.-%, insbesondere 2 bis 30 Gew.-%. Solche Füllstoffgehalte verleihen der Zusammensetzung zum einen eine bessere Stabilität ohne jedoch beim Aufschmelzen der Zusammensetzung deren Viskosität so stark zu erhöhen, dass deren Spritzgussfähigkeit verloren ginge. Außerdem reduziert sich durch den Zuschlag an anorganischen Füllstoffen der Anteil an thermoplastischem Polymer, wodurch die Zusammensetzung insgesamt günstiger in der Herstellung ist. Ein weiterer Vorteil besteht darin, dass durch den Einsatz von anorganischen Füllstoffen in der genannten Größenordnung der Volumenschrumpf beim Spritzgießen reduziert wird. Auf diese Weise wird die Maßhaltigkeit von hergestellten Formkörpern verbessert.

Im Rahmen der vorliegenden Erfindung können im Prinzip alle anorganischen Füllstoffe verwendet werden, welche sich zur Füllung von Polymerzusammensetzungen, insbesondere zur Füllung von Thermoplasten eignen. Vorzugsweise ist der anorganische Füllstoff ausgewählt aus der Gruppe umfassend Glas, insbesondere Glasfasern, Glasmehl, Glas(hohl)kugeln und Glasplättchen, (Quarz-)Sand, Gips, pyrogene Kieselsäure, Bentonit, Kreide, Kaolin, Gesteinsmehle, Schwerspat, und/ oder Wollastonit sowie Mischungen von diesen. Auch andere wasserunlösliche anorganische Füllstoffe können verwendet werden.

Zusätzlich zu den Füllstoffen kann die Zusammensetzung einen oder mehrere Hilfsstoffe in üblichen Mengen enthalten, beispielsweise keramisierend wirkende Additive, Glasfritten, Glasfasern, Ammoniumpolyphosphat, Zinkborat, Kaolin, Ton und/oder Bentonit, ablativ wirkende Brandschutzadditive, wie Aluminiumhydroxid, Aluminiumhydroxid-Trihydrat, Böhmit (AlOOH), Magnesiumhydroxid, Zinkborat und/oder Calciumsulfat, ergänzende intumeszierende, insbesondere anorganische Brandschutzadditive, wie Natrium-Borosilikat, gekapseltes Natrium-Borosilikat. Einige dieser Additive erfüllen gleichzeitig auch Füllstoff-Funktionen. Ferner können Hilfsstoffe wie Stabilisatoren, Pigmente, Fungizide und/oder Weichmacher eingesetzt werden.

Zu im Rahmen der Erfindung als Hilfsstoffe einsetzbaren Stabilisatoren, insbesondere UV-Stabilisatoren oder Antioxidantien, zählen Phosphite, Phenole, sterisch gehinderte Phenole hohen Molekulargewichts, polyfunktionelle Phenole, schwefel- und phosphorhaltige Phenole oder Amine.

Als Pigmente sind nicht reaktive, feinteilige anorganische Mineralien geeignet. Diese können gemahlen, gefällt oder an ihrer Oberfläche behandelt sein. Beispiele sind Kreide, beschichtete Kreide, Kalkmehl, Calcium-Magnesium-Carbonate, Aluminiumoxide und -hydroxide, gefällte Kieselsäure, Titandioxid, Bariumsulfat, Natrium- oder Aluminiumsilikate, Zeolithe, Bentonite oder gemahlene Mineralien. Die Korngröße soll zwischen 1 bis 200 µm betragen, insbesondere zwischen 3 bis 50 µm. Zu beachten ist hierbei, dass es zwischen den verwendbaren Füllstoffen und den Pigmenten stofflich häufig keine klare Abgrenzung gibt, da beispielsweise Kreide sowohl als Füllstoff, als auch als Weißpigment Verwendung finden kann.

Besonders bevorzugt ist der Einsatz von flammhemmenden Brandschutzadditiven, die auch als Flammschutzmittel bezeichnet werden. Vorliegend einsetzbare Flammschutzmittel sind beispielsweise polybromierte Diphenylether (PentaBDE, OctaBDE, DecaBDE), TBBPA und HBCD, Melamin, Harnstoff, APP (Ammoniumpolyphosphat), TCEP (Tris(chlorethyl)phosphat), TCPP (Tris(chlorpropyl)phosphat), TDCPP (Tris(dichlorisopropyl)phosphat), TPP (Triphenylphosphat), TEHP (Tris-(2-ethylhexyl)phosphat), TKP (Trikresylphosphat), ITP ("Isopropyliertes Triphenylphosphat") Mono-, Bis- und Tris(isopropylphenyl)phosphate unterschiedlichen Isopropylierungsggrades, RDP (Resorcinol-bis(diphenylphosphat)), BDP (Bisphenol-A-bis(diphenylphosphat)), ATH (Aluminiumhydroxid), MDH (Magnesiumhydroxid), Ammoniumsulfat ((NH₄)₂SO₄) und -phosphat ((NH₄)₂PO₄), EDAP (Ethylendiaminphosphat), GP (Guanidinphosphat) oder auch Mischungen von diesen.

Ein weiterer Gegenstand der vorliegenden Erfindung betrifft einen Intumeszierenden Formkörper, hergestellt durch Spritzgießen eines erfindungsgemäßen intumeszierenden Spritzgussmaterials.

Zur Herstellung eines solchen Formkörpers wird zweckmäßigerweise in der Weise vorgegangen, dass zunächst eine erfindungsgemäße Zusammensetzung wie oben beschrieben als Feststoffmischung hergestellt wird. Diese Zusammensetzung wird anschließend auf einer herkömmlichen Spritzgussmaschine verarbeitet und in bereit gestellte Spritzgussformen eingefüllt. Nach dem Erkalten beziehungsweise Verfestigen der Formkörper können diese aus der Spritzgussform entnommen werden.

Alternativ hierzu kann die Zusammensetzung auch erst in der Spritzgussmaschine hergestellt, wobei das Aufschmelzen und Vermischen in einem Extruder der Spritzgussmaschine erfolgt. Eine auf diesem Wege hergestellte Zusammensetzung kann entweder unmittelbar in einer Spritzgussmaschine zu Formkörpern weiterverarbeitet, oder aber zunächst ausgepresst und anschließend granuliert werden. Das erhaltene Granulat kann dann zu einem späteren Zeitpunkt für die Herstellung von erfindungsgemäßen Formkörpern verwendet werden.

Gegenstand der vorliegenden Erfindung ist ferner ein Lüftungsgitter zur Verhinderung des Durchtritts von Feuer und Rauch im Brandfall aus einem Raum in einen anderen, wobei das Lüftungsgitter aus einer Vielzahl sich schneidender Gitterrippen aufgebaut ist und aus einer Zusammensetzung besteht, die zumindest einen im Brandfall aufschäumenden Wirkstoff und ein Bindemittel enthält. Das Lüftungsgitter ist dabei vorteilhafterweise ein intumeszierender Formkörper, der durch Spritzgießen einer erfindungsgemäßen Zusammensetzung hergestellt ist.

Lüftungsgitter innerhalb eines Gebäudes stellen im Brandfall ein Sicherheitsrisiko dar, da durch sie Feuer und Rauch leicht von einem Raum in den nächsten gelangen kann. Um diesem Problem zu begegnen wird in der DE 195 24 766 A1 eine selbstschließende Lüftungsklappe vorgeschlagen, deren Klappenflügel zur Steigerung der Hitzebelastbarkeit im Brandfall mit einem intumeszierenden Material beschichtet sind. Die Feuerbeständigkeit derartiger Lüftungsklappen ist jedoch nicht sehr befriedigend, da die Intumeszenzbeschichtung verhältnismäßig dünn ist und die Lüftungsklappe selbst aus Metall gefertigt ist, so dass sich leicht Wärmebrücken ausbilden können.

Weiterhin sind Lüftungsgitter aus dem Stand der Technik bekannt, die vollständig aus einem Material bestehen, welches intumeszierende Eigenschaften besitzt. So wird von der Firma Helios Ventilatoren GmbH & Co. ein Lüftungsstein vertrieben, der ein organisches, im Brandfall aufschäumendes Material beinhaltet. Solche Lüftungssteine werden über einen Gießprozess erzeugt, in dem zunächst die Komponenten des Steins miteinander vermengt und anschließend in die gewünschte Form gegossen werden. Da solche gießfähigen Zusammensetzungen wegen des Anteils organischer Intumeszenzmaterialien in der Regel hohe Viskositäten besitzen, sind die Formgebungsmöglichkeiten für hiermit herstellbare Lüftungssteine sehr begrenzt. Insbesondere die Herstellung feinerer Strukturen ist mit solchen Zusammensetzungen nicht in ausreichender Qualität möglich. Außerdem werden die Aushärtezeiten der verwendeten Zusammensetzung als unzureichend empfunden, da sich diese nachteilig auf die mit einer Gießform erzielbaren Taktzeiten in der Produktion auswirkt.

Die Aufgabe der Erfindung besteht somit darin, ein durch Intumeszenz selbstschließendes Lüftungsgitter zu schaffen, dass sich einfacher herstellen lässt und bei dem komplexere Strukturen verwirklicht werden können.

Gelöst wird diese Aufgabe durch die Verwendung von Blähgraphit und/ oder eines silikatischen Materials in Kombination mit einem thermoplastischen polymeren Bindemittel.

Ein erster Gegenstand der vorliegenden Erfindung betrifft somit ein Lüftungsgitter zur Verhinderung des Durchtritts von Feuer und Rauch im Brandfall aus einem Raum in einen anderen, wobei das Lüftungsgitter aus einer Vielzahl sich schneidender Gitterrippen aufgebaut ist und aus einer Zusammensetzung besteht, die zumindest einen im Brandfall aufschäumenden Wirkstoff und ein Bindemittel enthält, wobei der im Brandfall aufschäumende Wirkstoff ausgewählt ist aus Blähgraphit und/ oder blähfähigem silikatischen Material und das Bindemittel ein thermoplastisches Polymer ist.

Durch die Verwendung eines thermoplastischen Polymers kann die Blähgraphit und/ oder ein blähfähiges silikatisches Material enthaltende Zusammensetzung mittels Spritzguss in die Form des erfindungsgemäßen Lüftungsgitter gebracht werden. Durch die Möglichkeit des Einsatzes eines Spritzgussverfahrens können kürzere Produktionszeiten realisiert werden und außerdem wird dadurch die Herstellung von Lüftungsgittern mit feineren Strukturen möglich. Solche feineren Strukturen sind beispielsweise feine Gitterrippen oder aber auch zu Verbindungszwecken mehrerer Lüftungsgitter an diesen angebrachte Nuten bzw. Federn. Diese können beispielsweise als Schwalbenschwanznut bzw.- feder ausgeformt sein.

Im Brandfall dehnt sich der in dem Material des Lüftungsgitters enthaltene Blähgraphit oder das blähfähige silikatische Material durch Hitzeeinwirkung auf, mit anderen Worten, es vergrößert sich das Volumen der Gitterrippen. Dadurch werden von der Brandseite ausgehend die Gitterdurchlässe zunehmend verschlossen, bis praktisch keine Luft bzw. kein Rauch mehr durch das Gitter dringen kann. Das als Bindemittel verwendete thermoplastische Polymer stellt bei diesem Prozess den erforderlichen Zusammenhalt sicher, da es durch die Hitze des Brandes in seinen plastischen Zustand überführt wird. Da das Material des Gitters selbst längere Zeit hohen Temperaturen standzuhalten vermag wird auf diese Weise ein wirksamer Brandschutz erzielt. Dagegen verhält sich das Lüftungsgitter im Normalfall wie ein Metallgitter.

Ein weiterer Vorteil des erfindungsgemäßen selbstverschließenden Lüftungsgitters besteht darin, dass leichte Verschmutzungen wie Staub, Fett oder dergleichen die Funktion des Gitters praktisch nicht beeinträchtigen. Ferner müssen keine beweglichen Teile vorgesehen werden, die im Notfall versagen könnten.

Die erfindungsgemäßen Lüftungsgitter können beispielsweise in Mauersteinstärke hergestellt und unmittelbar bei Erstellung einer Mauer integriert werden oder aber auch nachträglich in hierfür ausgesparte Öffnungen eingesetzt werden. Zur Verbindung mit dem Mauerwerk oder einer Betonwand kann beispielsweise Zementmörtel oder ein Zementkleber verwendet werden.

In vorteilhafter Ausgestaltung des erfindungsgemäßen Lüftungsgitters enthält die Zusammensetzung keine organischen intumeszierenenden Materialien.

In Weiterbildung der vorliegenden Erfindung kann das Lüftungsgitter einen durchgehenden Mantel aufweisen und als rechteckiger oder zylindrischer Körper ausgestaltet sein. Der durchgehende Mantel deckt das Gitter hierbei an sämtlichen Seitenflächen ab, sodass nur die durch die Gitterrippen charakterisierten Ein- und Auslassflächen frei bleiben.

Das erfindungsgemäße Lüftungsgitter kann ferner wenigstens eine Verbindungseinrichtung aufweisen, mit der das Lüftungsgitter modulartig mit weiteren Lüftungsgittern verbunden werden kann, wobei die Verbindungseinrichtung vorzugsweise auf der Außenseite des Mantels angeordnet ist. Hierdurch können mit einem Bautyp des Lüftungsgitters unterschiedlich dimensionierte Lüftungsdurchlässe im Mauerwerk eines Gebäudes geschaffen werden, indem beispielsweise zwei oder vier erfindungsgemäße Lüftungsgitter zu einem Gitter miteinander verbunden werden.

Als Verbindungstyp zwischen mehreren Lüftungsgittern ist eine Nut-/ Federverbindung besonders geeignet. In diesem Fall besteht die Verbindungseinrichtung folglich in einer Nut beziehungsweise einer Feder, die so ausgestaltet sind, dass sie zueinander korrespondieren. Es ist ebenso möglich, dass das erfindungsgemäße Lüftungsgitter ausschließlich Nuten aufweist und die Federn als separate Bauteile zur Verbindung mehrere Gitter in die jeweiligen Nuten eingesetzt werden. Bevorzugt bestehen diese separaten Federn aus derselben Zusammensetzung wie das Lüftungsgitter.

Um einen besonders festen Zusammenhalt zwischen mehreren Lüftungsgittern zu erzielen, kann die Nut eine Hinterschneidung und die Feder eine hierzu entsprechende Ausformung besitzen. Dies kann insbesondere in Form einer Schwalbenschwanznut bzw.- feder realisiert werden. Die Lüftungsgitter können so vor dem Einbau an gewünschter Stelle durch Zusammenschieben vormontiert werden. Die Hinterschneidungen verhindern ein Auseinanderfallen der verschiedenen Gittermodule während der Montage. Zur Fixierung kann die Nut-/ Federverbindung auch mit einem Klebstoff fixiert werden.

In besonders vorteilhafter Weise verjüngen sich Nut und Feder entlang ihrer Längsrichtung. Auf diese Weise wird eine Auflauffläche gebildet, so dass die miteinander zu koppelnden Lüftungsgitter nur soweit ineinander geschoben werden können, bis die Gitterrippen bündig zueinander positioniert sind. Die exakte Montage auf der Baustelle wird hierdurch erheblich vereinfacht.

Die verwendete Verbindungseinrichtung verläuft weiter bevorzugt entlang der Längsausdehnung des Mantels und erstreckt sich insbesondere über dessen gesamte Längsausdehnung, schließt also mit den Kanten des Mantels ab.

Nach einer besonders bevorzugten Ausführungsform des erfindungsgemäßen Lüftungsgitters weist dieses vier Verbindungseinrichtungen auf, die in der Weise angeordnet sind, dass das Lüftungsgitter modulartig mit vier weiteren Lüftungsgittern verbunden werden kann. Eine solche Ausführungsform kann beispielsweise so ausgestaltet sein, dass das Lüftungsgitter einen Mantel mit rechteckigem oder quadratischem Querschnitt aufweist und jede der rechteckigen bzw. quadratischen Mantelflächen über jeweils eine Verbindungseinrichtung verfügt.

Werden bei der zuvor beschriebenen Ausführungsform Nut-/ Federverbindungen als Verbindungseinrichtungen verwendet, ist es weiter bevorzugt, dass von den vier Verbindungseinrichtungen jeweils zwei als Nuten und zwei als Federn ausgebildet sind. Ganz besonders bevorzugt sind diese auf dem Mantel des Lüftungsgitters in der Weise angeordnet, dass die zwei Nuten auf zwei benachbarten Mantelflächen und die zwei Federn ebenfalls auf zwei benachbarten Mantelflächen vorgesehen sind. Hierdurch lässt sich eine beliebige Zahl der erfindungsgemäßen Lüftungsgitter modulartig miteinander verknüpfen.

Zusätzlich oder alternativ zu den zuvor beschriebenen, am Lüftungsgitter ausgebildeten Verbindungseinrichtungen kann dem Lüftungsgitter wenigstens ein Kopplungsmittel zugeordnet sein, mit der das Lüftungsgitter modulartig mit weiteren Lüftungsgittern verbunden werden kann. Für solche Kopplungsmittel kommen beispielsweise als elastische Federn und/ oder Klammern in Betracht.

Im Rahmen der vorliegenden Erfindung kann vorgesehen sein, dass die Gitterrippen eines Lüftungsgitters zumindest zwei unterschiedliche Stärken aufweisen und zur Ausbildung des Gitters in der Weise angeordnet sind, dass auf mehrere zueinander benachbarte dünnere Gitterrippen eine oder mehrere stärkere Gitterrippen folgen. Auf diese Weise können in bestimmten Intervallen stabilisierende stärkere Gitterrippen vorgesehen werden, um so die Gesamtstabilität des Gitters zu erhöhen. Die stärkeren Rippen können beispielsweise wenigstens die 1,5-fache, vorzugsweise wenigstens die 2-fache, besonders bevorzugt die wenigstens 2,5-fache oder gar wenigstens 5-fache oder 6-fache Stärke der dünneren Gitterrippen besitzen. Auch mehrere, unterschiedlich dicke stärkere Rippen können verwendet werden.

Diese Anordnung von stärkeren und dünneren Gitterrippen kann bei einer gekreuzten Gitterstruktur für beide oder wahlweise eine der Gruppen gekreuzter Gitterrippen vorgesehen sein. Wenn beide Gruppen gekreuzter Gitterrippen die-se Ausgestaltung aufweisen, können die Intervalle, in denen die stärkeren Gitterrippen eingesetzt sind, gleich oder verschieden sein.

Erfindungsgemäße Lüftungsgitter können dank der Spritzgussfähigkeit der verwendeten Zusammensetzung im Prinzip jede mögliche Formgestaltung und Anordnung der Gitterrippen besitzen. So bilden die Gitterrippen beispielsweise zumindest abschnittsweise eine gekreuzte Gitterstruktur, eine oder Wabenstruktur.

Nach einer besonders bevorzugten Ausführungsform des erfindungsgemäßen Lüftungsgitters ist dieses über ein Spritzgussverfahren herstellbar bzw. nach einem Spritzgussverfahren hergestellt.

Ein weiterer Gegenstand der vorliegenden Erfindung betrifft ein Verfahren zur Herstellung eines Lüftungsgitters zur Verhinderung des Durchtritts von Feuer und Rauch im Brandfall aus einem Raum in einen anderen, umfassend die folgenden Schritte:
- Bereitstellen einer Form, insbesondere einer Spritzgussform, mit einer Vielzahl von Kavitäten zur Ausbildung sich schneidender Gitterrippen des Lüftungsgitters;
- Einbringen einer flüssigen Zusammensetzung in die Form, vorzugsweise im Spritzguss, wobei die Zusammensetzung ein im Brandfall aufschäumendes Material, das Blähgraphit und/ oder ein blähfähiges silikatisches Material und ein thermoplastisches Polymer enthält;
- Aushärten der Zusammensetzung zur Bildung eines Lüftungsgitters;
- Entnehmen des Lüftungsgitters aus der Form.

Der Einsatz eines Spritzgussverfahrens ist aufgrund der eingangs erwähnten Vorteile besonders bevorzugt.

In Weiterbildung des erfindungsgemäßen Verfahrens wird die Zusammensetzung vor dem Einbringen in die Form aus dem im Brandfall aufschäumenden Material und dem thermoplastischen Polymer in einem separaten Arbeitsgang erstellt, bei dem das thermoplastische Polymer aufgeschmolzen und das Brandfall aufschäumende Material sowie gewünschtenfalls Hilfsstoffe mit der Schmelze vermischt werden. In weiter bevorzugter Weise kann das Aufschmelzen und Vermischen in einem Extruder erfolgen. Eine auf diesem Wege hergestellte Zusammensetzung kann entweder unmittelbar in einer Spritzgussmaschine weiterverarbeitet, oder aber zunächst ausgepresst und granuliert werden. Das erhaltene Granulat kann dann zu einem späteren Zeitpunkt für die Herstellung von erfindungsgemäßen Lüftungsgittern verwendet werden.

Die vorliegende Erfindung wird im Folgenden anhand eines in den Fign. 1 bis 3 dargestellten Ausführungsbeispiels näher erörtert. Hierbei zeigt
- Fig. 1: ein erfindungsgemäßes Lüftungsgitter in der Draufsicht,
- Fig. 2: ein erfindungsgemäßes Lüftungsgitter in seitlicher Ansicht und
- Fig. 3: ein erfindungsgemäßes Lüftungsgitter in dreidimensionaler Darstellung.

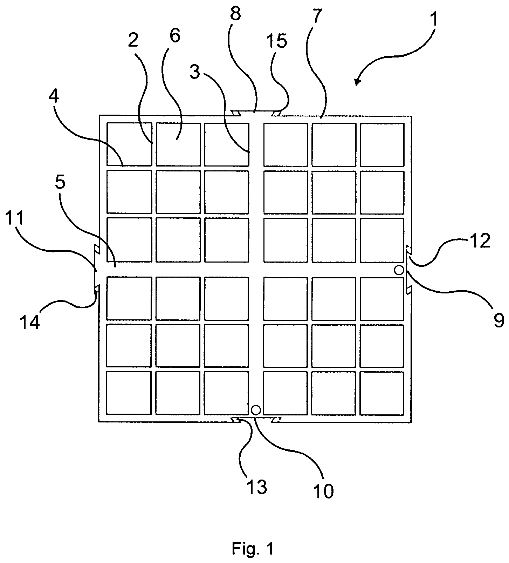

In Fig. 1 ist ein erfindungsgemäßes Lüftungsgitter 1 dargestellt. Das Lüftungsgitter 1 besteht aus einer Zusammensetzung aus 40 Gew.-% Blähgraphit, 40 Gew.-% HDPE als thermoplastisches Polymer sowie 20 Gew.-% Kreide als Füllstoff. Das thermoplastische Polymer wurde zunächst in einem Extruder aufgeschmolzen und der Blähgraphit sowie die Kreide untergemischt und die Zusammensetzung granuliert. Anschließend wurde aus diesem Granulat in einer Spritzgussmaschine das Lüftungsgitter 1 erzeugt.

Das Lüftungsgitter 1 besitzt einen quadratischen Querschnitt und weist eine Vielzahl horizontal und vertikal verlaufender Gitterrippen 2, 3, 4, 5 auf, die zu dem Gittermuster korrespondierende Gitteröffnungen 6 als Luftdurchlässe bilden. Die horizontalen und vertikalen Gitterrippen 2, 3, 4, 5 weisen jeweils dünnere Gitterrippen 2, 4 bzw. stabilisierende dickere Gitterrippen 3, 5 auf.

Die Gitterrippen 2, 3, 4, 5 sind von einem umlaufenden Mantel 7 eingefasst, auf dessen Außenseite vier Verbindungselemente 8, 9, 10, 11 vorgesehen sind, von denen zwei auf benachbarten Außenseiten befindliche Verbindungselemente 8, 9, 10, 11 als Federn 8, 11 und die beiden anderen als Nuten 9, 10 ausgestaltet sind. Die Nuten 9, 10 weisen Hinterschneidungen 12, 13 auf, zu denen die Federn 8, 11 korrespondierende Ausformungen 14, 15 besitzen.

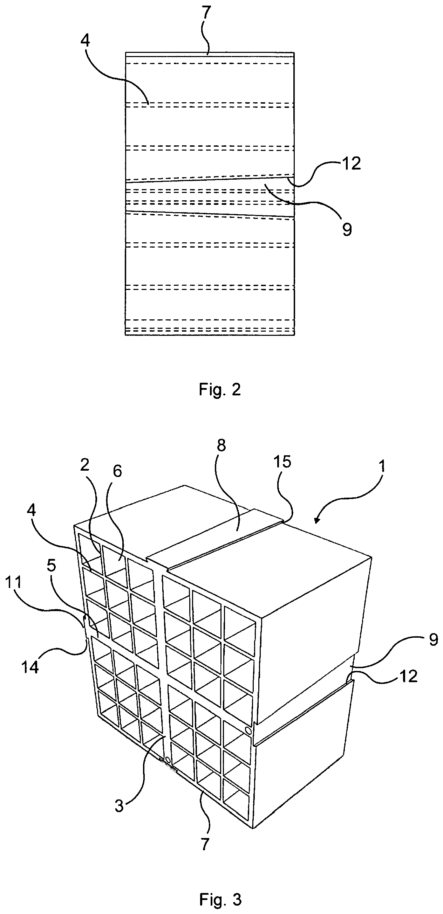

In den Fign. 2 und 3 ist das in Fig. 1 abgebildete Lüftungsgitter 1 in seitlicher Ansicht (Fig. 2) und in dreidimensionaler Ansicht von schräg oben (Fig. 3) dargestellt. In diesen Darstellungen ist zu erkennen, dass sich die Nut 9 entlang ihrer Längsrichtung zur linken Seite hin verjüngt. Bei der in Fig. 2 gezeigten Ansicht sind die im Inneren des Lüftungsgitters 1 verlaufenden Gitterrippen 4 aus perspektivischen Gründen durch den Mantel 7 verdeckt, jedoch durch gestrichelte Linien angedeutet.

Das in den Figuren abgebildete Lüftungsgitter 1 wird beispielsweise in eine Betonwand eingesetzt. Im Brandfall dehnt sich der in dem Lüftungsgitter 1 enthaltene intumeszierende Wirkstoff, beispielsweise Blähgraphit, durch Hitzeeinwirkung auf. Da der Mantel 7 des Lüftungsgitters 1 unmittelbar mit der Betonwand in Kontakt steht, ist eine Ausdehnung in dieser Richtung nicht möglich. Folglich kann die Volumenexpansion praktisch nur innerhalb des Gitters 1 stattfinden. Durch die Ausdehnung der Gitterrippen 2, 3, 4, 5 sowie des Mantels 7 werden die Gitteröffnungen 6 in kurzer Zeit verschlossen, so dass keine Rauch oder Verbrennungsgase durch das Lüftungsgitter dringen können. Ein Übergriff des Brandes auf den Nachbarraum durch heiße Brandgase wird somit effektiv verhindert.

### Bezugszeichenliste

- 1: Lüftungsgitter
- 2: Gitterrippe
- 3: Gitterrippe
- 4: Gitterrippe
- 5: Gitterrippe
- 6: Gitteröffnung
- 7: Mantel
- 8: Feder (Verbindungseinrichtung)
- 9: Nut (Verbindungseinrichtung)
- 10: Nut (Verbindungseinrichtung)
- 11: Feder (Verbindungseinrichtung)
- 12: Hinterschneidung
- 13: Hinterschneidung
- 14: Korrespondierende Ausformung
- 15: Korrespondierende Ausformung

## Patentansprüche

1. Lüftungsgitter (1) zur Verhinderung des Durchtritts von Feuer und Rauch im Brandfall aus einem Raum in einen anderen, wobei das Lüftungsgitter aus einer Vielzahl sich schneidender Gitterrippen (2, 3, 4, 5) aufgebaut ist und aus einer Zusammensetzung besteht, die zumindest einen im Brandfall aufschäumenden Wirkstoff und ein Bindemittel enthält,
**dadurch gekennzeichnet, dass**
der im Brandfall aufschäumende Wirkstoff ausgewählt ist aus Blähgraphit und/ oder blähfähigem silikatischen Material und das Bindemittel ein thermoplastisches Polymer ist.

2. Lüftungsgitter nach Anspruch 1,
**dadurch gekennzeichnet, dass**
die Zusammensetzung spritzgießbar ist und das polymere Bindemittel ein thermoplastisches Polymer mit einem Erweichungspunkt von 160°C oder weniger aufweist.

3. Lüftungsgitter nach Anspruch 1 oder 2, **dadurch gekennzeichnet, dass** die Zusammensetzung weitestgehend wasserfrei ist.

4. Lüftungsgitter nach einem der vorstehenden Ansprüche, **dadurch gekennzeichnet, dass** das thermoplastische Polymer einen Erweichungspunkt von 50 bis 150°C aufweist, insbesondere von 70 bis 140°C.

5. Lüftungsgitter nach einem der vorstehenden Ansprüche, **dadurch gekennzeichnet, dass** der Erweichungspunkt des thermoplastischen Polymers zumindest 10°C unterhalb der onset-Temperatur des expandierbaren Graphits liegt, insbesondere zumindest 15°C.

6. Lüftungsgitter nach einem der vorstehenden Ansprüche, **dadurch gekennzeichnet, dass** der Gehalt an thermoplastischem Polymer in der Zusammensetzung 10 bis 60 Gew.-% beträgt, insbesondere 30 bis 50 Gew.-%.

7. Lüftungsgitter nach einem der vorstehenden Ansprüche, **dadurch gekennzeichnet, dass** das thermoplastische Polymer ausgewählt ist aus der Gruppe umfassend Polyolefine, wie Polyethylen, insbesondere (PE-HD (HDPE) ,PE-LD (LDPE),PE-LLD (LLDPE), PE-HMW, PE-UHMW), Polypropylen, ferner Polyurethane, Polyvinylacetate, Polyvinylether, Polyvinylpropionate, Polystyrole, natürliche oder synthetische Kautschuke, Silikone, Poly-(meth)acrylate und Homo- und Copolymere auf der Grundlage von (Meth)acrylaten, Acrylnitril, Vinylestern, Vinylethern, Vinylchlorid und/oder Styrol sowie Hybrid-Polymere, vorzugsweise solche auf der Grundlage von Polyethylenoxid und/oder Polypropylenoxid mit Dimethylsilyl-Endgruppen, Polymethacrylsäurealkylester, Polyacrylsäurealkylester, Polymethacrylsäurearylester), Polyacrylsäurearylester und/oder Copolymere hiervon mit n-Butylacrylat, Vinylacetat und/oder Styrol, des Weiteren Ethylen-Acrylsaeure-acrylat-Copolymere, Ethylen-Acrylsäure-Maleinsäureanhydrid, Ethylen-Butylacrylat-Copolymere, Ethylen-Buten-Copolymere, Ethylen-Ethylacetat-Copolymere, Ethylen-Methacrylsäureester-Copolymere, Ethylen-Methacrylsäure-Copolymere, Ethylen-Methylmethacrylat-Copolymere oder Mischungen von diesen Homo-, Co- beziehungsweise Terpolymeren.

8. Lüftungsgitter nach einem der vorstehenden Ansprüche, **dadurch gekennzeichnet, dass** der Anteil an expandierbarem Graphit in der Zusammensetzung 10 bis 85 Gew.-% beträgt, insbesondere 20 bis 50 Gew.-%.

9. Lüftungsgitter nach einem der vorstehenden Ansprüche, **dadurch gekennzeichnet, dass** die Zusammensetzung zumindest einen anorganischen Füllstoff enthält, wobei der Anteil an anorganischem Füllstoff in der Zusammensetzung vorzugsweise 0,1 bis 50 Gew.-% beträgt, insbesondere 2 bis 30 Gew.-%.

10. Lüftungsgitter nach Anspruch 9, **dadurch gekennzeichnet, dass** der anorganische Füllstoff ausgewählt ist aus der Gruppe umfassend Glas, insbesondere Glasfasern, Glasmehl, Glas(hohl)kugeln und Glasplättchen, (Quarz-) Sand, Gips, pyrogene Kieselsäure, Bentonit, Kreide, Kaolin, Gesteinsmehle, Schwerspat, und/ oder Wollastonit sowie Mischungen von diesen.

11. Lüftungsgitter nach einem der vorstehenden Ansprüche, **dadurch gekennzeichnet, dass** die Zusammensetzung ein flammhemmendes Brandschutzadditiv enthält.

12. Lüftungsgitter nach Anspruch 11, **dadurch gekennzeichnet, dass** das flammhemmende Brandschutzadditiv ausgewühlt ist aus der Gruppe umfassend polybromierte Diphenylether (PentaBDE, OctaBDE, DecaBDE), TBBPA und HBCD, Melamin, Harnstoff, APP (Ammoniumpolyphosphat), TCEP (Tris(chlorethyl)phosphat), TCPP (Tris(chlorpropyl)phosphat), TDCPP (Tris(dichlorisopropyl)phosphat), TPP (Triphenylphosphat), TEHP (Tris-(2-ethylhexyl)phosphat), TKP (Trikresylphosphat), ITP ("Isopropyliertes Triphenylphosphat") Mono-, Bis- und Tris(isopropylphenyl)phosphate unterschiedlichen Isopropylierungsggrades, RDP (Resorcinol-bis(diphenylphosphat)), BDP (Bisphenol-A-bis(diphenylphosphat)), ATH (Aluminiumhydroxid), MDH (Magnesiumhydroxid), Ammoniumsulfat ((NH₄)₂SO₄) und -phosphat ((NH₄)₂PO₄), EDAP (Ethylendiaminphosphat), GP (Guanidinphosphat) oder auch Mischungen von diesen.

13. Lüftungsgitter nach einem der vorstehenden Ansprüche, **dadurch gekennzeichnet, dass** die Zusammensetzung einen oder mehrere Hilfsstoffe enthält, die insbesondere ausgewählt sind aus keramisierend wirkenden Additiven, ablativ wirkenden Brandschutzadditiven, flammhemmenden Brandschutzadditiven, ergänzenden intumeszierenden Brandschutzadditiven, Stabilisatoren, Pigmenten, Füllstoffen, Weichmachern und/oder Fungiziden.

14. Lüftungsgitter nach einem der vorstehenden Ansprüche, **dadurch gekennzeichnet, dass** das blähfähige silikatische Material ausgewählt ist aus Vermiculit, Natrium- und/ oder Kaliumsilikat, insbesondere Natrium- und/ oder Kaliumwasserglas.

15. Lüftungsgitter nach einem der vorstehenden Ansprüche, **dadurch gekennzeichnet, dass** die Zusammensetzung 10 bis 85 Gew.-% des im Brandfall aufschäumenden Wirkstoffs enthält, insbesondere 20 bis 50 Gew.-%, jeweils bezogen auf die gesamte Zusammensetzung.

16. Lüftungsgitter nach einem der vorstehenden Ansprüche, **dadurch gekennzeichnet, dass** das Lüftungsgitter einen durchgehenden Mantel (7) aufweist und als rechteckiger oder zylindrischer Körper ausgestaltet ist.

17. Lüftungsgitter nach einem der vorstehenden Ansprüche, **dadurch gekennzeichnet, dass** das Lüftungsgitter wenigstens eine Verbindungseinrichtung (8, 9, 10, 11) aufweist, mit der das Lüftungsgitter modulartig mit weiteren Lüftungsgittern verbunden werden kann, wobei die Verbindungseinrichtung (8, 9, 10, 11) vorzugsweise auf der Außenseite des Mantels (7) angeordnet ist.

18. Lüftungsgitter nach Anspruch 17, **dadurch gekennzeichnet, dass** die Verbindungseinrichtung (8, 9, 10, 11) eine Nut (9, 10) oder eine Feder (8, 11) ist.

19. Lüftungsgitter nach Anspruch 18, **dadurch gekennzeichnet, dass** die Nut (9, 10) eine Hinterschneidung (12, 13) und die Feder (8, 11) eine hierzu entsprechende Ausformung (14, 15) besitzt.

20. Lüftungsgitter nach Anspruch 18 oder 19, **dadurch gekennzeichnet, dass** die Nut (9, 10) und Feder (8, 11) sich entlang ihrer Längsrichtung verjüngen.

21. Lüftungsgitter nach einem der Ansprüche 17 bis 20, **dadurch gekennzeichnet, dass** die Verbindungseinrichtung (8, 9, 10, 11) entlang der Längsausdehnung des Mantels (7) verläuft.

22. Lüftungsgitter nach einem der Ansprüche 17 bis 21, **dadurch gekennzeichnet, dass** das Lüftungsgitter vier Verbindungseinrichtungen (8, 9, 10, 11) aufweist, die in der Weise angeordnet sind, dass das Lüftungsgitter modulartig mit vier weiteren Lüftungsgittern verbunden werden kann.

23. Lüftungsgitter nach einem der vorstehenden Ansprüche, **dadurch gekennzeichnet, dass** dem Lüftungsgitter wenigstens ein Kopplungsmittel zugeordnet ist, mit der das Lüftungsgitter modulartig mit weiteren Lüftungsgittern verbunden werden kann.

24. Lüftungsgitter nach Anspruch 23, **dadurch gekennzeichnet, dass** das Kopplungsmittel als Feder und/ oder als Klammer ausgestaltet ist.

25. Lüftungsgitter nach einem der vorstehenden Ansprüche, **dadurch gekennzeichnet, dass** die Gitterrippen (2, 3, 4, 5) eines Lüftungsgitters zumindest zwei unterschiedliche Stärken aufweisen und zur Ausbildung des Gitters in der Weise angeordnet sind, dass auf mehrere zueinander benachbarte dünnere Gitterrippen (2, 4) eine oder mehrere dickere Gitterrippen (3, 5) folgen.

26. Lüftungsgitter nach einem der vorstehenden Ansprüche, **dadurch gekennzeichnet, dass** die Gitterrippen (2, 3, 4, 5) zumindest abschnittsweise eine gekreuzte Gitterstruktur oder eine Wabenstruktur bilden.

27. Lüftungsgitter nach einem der vorstehenden Ansprüche, **dadurch gekennzeichnet, dass** das Lüftungsgitter über ein Spritzgussverfahren herstellbar ist.

28. Verfahren zur Herstellung eines Lüftungsgitters (1) zur Verhinderung des Durchtritts von Feuer und Rauch im Brandfall aus einem Raum in einen anderen, umfassend die folgenden Schritte:
- Bereitstellen einer Form, insbesondere einer Spritzgussform, mit einer Vielzahl von Kavitäten zur Ausbildung sich schneidender Gitterrippen (2, 3, 4, 5) des Lüftungsgitters;
- Einbringen einer flüssigen Zusammensetzung in die Form, vorzugsweise im Spritzguss, wobei die Zusammensetzung ein im Brandfall aufschäumendes Material, das Blähgraphit und/ oder ein blähfähiges silikatisches Material und ein thermoplastisches Polymer enthält;
- Aushärten der Zusammensetzung zur Bildung eines Lüftungsgitters;
- Entnehmen des Lüftungsgitters aus der Form.

29. Verfahren nach Anspruch 28, **dadurch gekennzeichnet, dass** die Zusammensetzung vor dem Einbringen in die Form aus dem im Brandfall aufschäumenden Material und dem thermoplastischen Polymer in einem separaten Arbeitsgang erstellt wird, wobei das thermoplastische Polymer aufgeschmolzen und das Brandfall aufschäumende Material sowie gewünschtenfalls Hilfsstoffe mit der Schmelze vermischt werden.

30. Verfahren nach Anspruch 29, **dadurch gekennzeichnet, dass** das Aufschmelzen und Vermischen in einem Extruder durchgeführt wird.

## Claims

1. A ventilation grid (1) for preventing fire and smoke from spreading from one room into another one in the event of a fire, wherein the ventilation grid is composed of a plurality of intersecting grid ribs (2, 3, 4, 5) and is made of a composition which at least contains one active substance which foams in case of fire and a binding agent,
**characterized in that**
the active substance foaming in case of fire is selected from exfoliated graphite and/or expandable, siliceous material and the binding agent is a thermoplastic polymer.

2. A ventilation grid according to claim 1,
**characterized in that**
the composition can be injection moulded and the polymeric binding agent comprises a thermoplastic polymer having a softening point of 160°C or less.

3. A ventilation grid according to claim 1 or 2, **characterized in that** the composition is largely anhydrous.

4. A ventilation grid according to one of the preceding claims, **characterized in that** the thermoplastic polymer has a softening point from 50 through 150°C, in particular from 70 through 140°C.

5. A ventilation grid according to one of the preceding claims, **characterized in that** the softening point of the thermoplastic polymer remains at least 10°C beneath the onset temperature of the expandable graphite, in particular at least 15°C.

6. A ventilation grid according to one of the preceding claims, **characterized in that** the thermoplastic polymer content is from 10 through 60 % by mass in the composition, in particular from 30 through 50 % by mass.

7. A ventilation grid according to one of the preceding claims, **characterized in that** the thermoplastic polymer is selected from the group comprising polyolefines, such as polyethylene, in particular (PE-HD (HDPE), PE-LD (LDPE), PE-LLD (LLDPE), PE-HMW, PE-UHMW), polypropylene, furthermore polyurethanes, polyvinyl acetates, polyvinyl ethers, polyvinyl propionates, polystyrenes, natural or synthetic caoutchoucs, silicones, poly methacrylates and homo- and copolymers on the base of methacrylates, acrylonitrile, vinyl esters, vinyl ethers, vinyl chloride and/or styrene as well as hybrid polymers, preferably such ones on the base of polyethylene oxide and/or polypropylene oxide with dimethylsilyl end groups, polymetha-acrylic acid alkyl ester, poly-acrylic acid alkyl ester, polymetha-acrylic acid aryl ester, poly-acrylic acid aryl ester and/or copolymers of these ones with n-butyl acrylate, vinyl acetate and/or styrene, furthermore ethylene acrylic acid acrylate copolymers, ethylene acrylic acid maleic acid anhydride, ethylene butyl acrylate copolymers, ethylene butene copolymers, ethylene ethyl acetate copolymers, ethylene methacrylic acid ester copolymers, ethylene methacrylic acid copolymers, ethylene methyl methacrylate copolymers or mixtures of these homo-, co- respectively terpolymers.

8. A ventilation grid according to one of the preceding claims, **characterized in that** the proportion of expandable graphite in the composition is from 10 through 85 % by mass, in particular from 20 through 50 % by mass.

9. A ventilation grid according to one of the preceding claims, **characterized in that** the composition contains at least one inorganic filling material, wherein the proportion of inorganic filling material in the composition is preferably from 0.1 through 50 % by mass, in particular from 2 through 30 % by mass.

10. A ventilation grid according to claim 9, **characterized in that** the inorganic filling material is selected from the group comprising glass, in particular glass fibres, glass powder, (hollow) glass spheres and glass plates, (quartz) sand, gypsum, pyrogenic silicic acid, bentonite, chalk, kaolin, rock flours, barite and/or wollastonite as well as mixtures of these ones.

11. A ventilation grid according to one of the preceding claims, **characterized in that** the composition contains a flame-retarding fire protection additive.

12. A ventilation grid according to claim 11, **characterized in that** the flame-retarding fire protection additive is selected from the group comprising polybromated diphenyl ethers (pentaBDE, octaBDE, decaBDE), TBBPA and HBCD, melamine, urea, APP (ammonium polyphosphate), TCEP (tris(chlorethyl)phosphate), TCPP (tris(chlorpropyl)phosphate), TPP (triphenyl phosphate), TEHP (tris-(2-ethylhexyl)phosphate), TKP (trikresyl phosphate), ITP ("isopropylized triphenyl phosphate"), mono-, bis- and tris(isopropylphenyl)phosphate of different isopropylation degrees, RDP (resorcinol bis(diphenyl phosphate), BDP (bisphenol-A-bis(diphenyl phosphate), ATH (aluminum hydroxide), MDH (magnesium hydroxide), ammonium sulfate ((NH₄)₂SO₄) and phosphate ((NH₄)₂PO₄), EDAP (ethylene diamine phosphate), GP (guanidine phosphate) or also mixtures of these ones.

13. A ventilation grid according to one of the preceding claims, **characterized in that** the composition contains one or more auxiliaries which are in particular selected from ceramifying additives, ablative fire protection additives, flame-retarding additives, supplementary intumescent fire protection additives, stabilizers, pigments, filling materials, plasticizers and/or fungicides.

14. A ventilation grid according to one of the preceding claims, **characterized in that** the expandable siliceous material is selected from vermiculite, sodium and/or potassium silicate, in particular sodium and/or potassium soluble glass.

15. A ventilation grid according to one of the preceding claims, **characterized in that** the composition contains 10 through 85 % by mass of the substance foaming in case of fire, in particular 20 through 50 % by mass, respectively in relation to the total composition.

16. A ventilation grid according to one of the preceding claims, **characterized in that** the ventilation grid comprises a continuous jacket (7) and is designed as a rectangular or cylindrical body.

17. A ventilation grid according to one of the preceding claims, **characterized in that** the ventilation grid comprises at least one connection device (8, 9, 10, 11), by means of which the ventilation grid can be connected in a modular manner to other ventilation grids, wherein the connection device (8, 9, 19, 11) is preferably placed on the outer side of the jacket (7).

18. A ventilation grid according to claim 17, **characterized in that** the connection device (8, 9, 10, 11) is a groove (9, 10) or a spring (8, 11).

19. A ventilation grid according to claim 18, **characterized in that** the groove (9, 10) comprises an undercut (12, 13) and the spring comprises a shape (14, 15) corresponding to the undercut (12, 13).

20. A ventilation grid according to claim 18 or 19, **characterized in that** the groove (9, 10) and the spring (8, 11) taper along the longitudinal directions thereof.

21. A ventilation grid according to one of the claims 17 to 20, **characterized in that** the connection device (8, 9, 10, 11) extends along the longitudinal extension of the jacket (7).

22. A ventilation grid according to one of the claims 17 to 21, **characterized in that** the ventilation grid comprises four connection devices (8, 9, 10, 11) which are arranged such that the ventilation grid can be connected in a modular manner to four other ventilation grids.

23. A ventilation grid according to one of the preceding claims, **characterized in that** at least one coupling means is associated with the ventilation grid, by means of which coupling means the ventilation grid can be connected to other ventilation grids.

24. A ventilation grid according to claim 23, **characterized in that** the coupling means is designed as a spring and/or as a clamp.

25. A ventilation grid according to one of the preceding claims, **characterized in that** the grid ribs (2, 3, 4, 5) of a ventilation grid at least comprise two different thicknesses and are arranged for forming the grid such that one or more adjacent thinner grid ribs (2, 4) are followed by one or more thicker grid ribs (3, 5).

26. A ventilation grid according to one of the preceding claims, **characterized in that** the grid ribs (2, 3, 4, 5) form a crossed grid structure or a honeycomb structure in at least some sections.

27. A ventilation grid according to one of the preceding claims, **characterized in that** the ventilation grid can be manufactured by an injection moulding process.

28. A method for manufacturing a ventilation grid (1) for preventing fire and smoke from spreading from one room into another one in the event of a fire, comprising the following steps:
- providing a mould, in particular an injection mould comprising a plurality of cavities for moulding intersecting grid ribs (2, 3, 4, 5) of the ventilation grid;
- introducing a liquid composition into the mould, preferably by injection moulding, wherein the composition contains a material foaming in case of fire which comprises exfoliated graphite and/or an expandable siliceous material and a thermoplastic polymer;
- curing the composition for forming a ventilation grid;
- removing the ventilation grid from the mould.

29. A method according to claim 28, **characterized in that** the composition, before being introduced into the mould, is prepared from the material foaming in case of fire and the thermoplastic polymer in a separate working step,
wherein the thermoplastic polymer is molten and the material foaming in case of fire as well as auxiliaries, if desired, are mixed with the molten mass.

30. A method according to claim 29, **characterized in that** the melting and mixing operations are carried out in an extruder.

## Revendications

1. Grille de ventilation (1) destinée à empêcher le feu et la fumée de se propager d'une pièce à une autre pièce en cas d'incendie, la grille de ventilation étant composée d'une pluralité de nervures de grille (2, 3, 4, 5), qui se coupent, et consistant en une composition, qui contient au moins un agent actif moussant en cas d'incendie et un agent liant,
**caractérisée en ce que**
l'agent actif moussant en cas d'incendie est sélectionné parmi le graphite expansé et/ou un matériau siliceux expansible et l'agent liant est un polymère thermoplastique.

2. Grille de ventilation selon la revendication 1,
**caractérisée en ce que**
la composition peut être moulée par injection et l'agent liant polymérique comprend un polymère thermoplastique ayant un point de ramollissement de 160°C ou moins.

3. Grille de ventilation selon la revendication 1 ou la revendication 2,
**caractérisée en ce que** la composition est largement anhydre.

4. Grille de ventilation selon l'une des revendications précédentes, **caractérisée en ce que** le polymère thermoplastique comprend un point de ramollissement compris entre 50 et 150°C, notamment entre 70 et 140°C.

5. Grille de ventilation selon l'une des revendications précédentes, **caractérisée en ce que** le point de ramollissement du polymère thermoplastique se trouve au moins 10°C au-dessous de la température «onset» du graphite expansible, notamment au moins 15°C.

6. Grille de ventilation selon l'une des revendications précédentes, **caractérisée en ce que** la teneur en polymère thermoplastique dans la composition est comprise entre 10 et 60 % en poids, notamment entre 30 et 50 % en poids.

7. Grille de ventilation selon l'une des revendications précédentes, **caractérisée en ce que** le polymère thermoplastique est sélectionné dans le groupe comprenant des polyoléfines, telles que du polyéthylène, notamment (du PE-HD (HDPE), du PE-LD (LDPE), du PE-LLD (LLDPE), du PE-HMW, du PE-UHMW), di polypropylène, en outre des polyuréthanes, des polyacétates de vinyle, des éthers polyvinyliques, des polypropionates de vinyle, des polystyrènes, des caoutchoucs naturels ou synthétiques, des silicones, des poly (méthacrylates) et des homopolymères et des copolymères sur la base de méthacrylates, d'acrylonitrile, de vinyle esters, de vinyle éthers, de chlorure de vinyle et/ou de styrène ainsi que des polymères hybrides, de préférence ceux sur la base de poly (oxyde d'éthylène) et/ou de poly (oxyde de propylène) comprenant des groupes terminaux de diméthylsilyl, d'esters alkyle d'acide polyméthacrylique, d'esters alkyle d'acide polyacrylique, d'esters aryle d'acide polyméthacrylique, d'esters aryle d'acide polyacrylique et/ou des copolymères de ceux-ci comprenant de l'acrylate de n-butyle, de l'acétate de vinyle et/ou du styrène, en outre des copolymère d'acrylate d'éthylène-acide acrylique, de l'anhydride maléique d'éthylène-acide acrylique, des copolymères d'éthylène de butyle d'acrylate , des copolymères d'éthylène-butène, des copolymères d'éthylène-acétate d'éthyle, des copolymères d'éthylène-ester d'acide méthacrylique, des copolymères d'éthylène-acide méthacrylique, des copolymères d'éthylène-méthacrylate de méthyle ou des mélanges de ces homopolymères, copolymères ou terpolymères.

8. Grille de ventilation selon l'une des revendications précédentes, **caractérisée en ce que** la proportion de graphite expansible dans la composition est comprise entre 10 et 85 % en poids, notamment entre 20 et 50 % en poids.

9. Grille de ventilation selon l'une des revendications précédentes, **caractérisée en ce que** la composition contient au moins un matériau de remplissage inorganique, la proportion du matériau de remplissage inorganique dans la composition étant comprise entre 0,1 et 50 % en poids, notamment entre 2 et 30 % en poids.

10. Grille de ventilation selon la revendication 9, **caractérisée en ce que** le matériau de remplissage inorganique est sélectionné dans le groupe comprenant du verre, notamment des fibres de verre, de la poudre de verre, des bulles de verre et des plaquettes de verre, du sable (de quartz), du plâtre, de l'acide silicique pyrogène, de la bentonite, de la craie, du kaolin, des poudres de roche, de la barytine et/ou de la wollastonite ainsi que des mélanges de ceux-ci.

11. Grille de ventilation selon l'une des revendications précédentes, **caractérisée en ce que** la composition contient un additif ignifuge à retardateur de flamme.

12. Grille de ventilation selon la revendication 11, **caractérisée en ce que** l'additif ignifuge à retardateur de flamme est sélectionné dans la groupe comprenant des diphényl-éthers polybromés (pentaBDE, octaBDE, décaBDE), du TBBPA et du HBCD, de la mélamine, de l'urée, du APP (polyphosphate d'ammonium), du TCEP (tris(chloroéthyle)phosphate), du TCPP (tris(chloropropyle)phosphate), du TDCPP (tris(dichloro-isopropyle)phosphate), du TPP (phosphate de triphényle), TEHP (tris-(2-éthylhexyl)phosphate), du TKP (phosphate de trikrésyle), de l'ITP (« phosphate de triphényle isopropylé »), des mono, bis et tris(isopropylphényle)phosphates du degré d'isopropylation différent, du RDP (résorcinol-bis(diphényle)phosphate), BDP (bisphénole-A-bis(diphényle-phosphate)), de l'ATH (hydroxyde d'aluminium), du MDH (hydroxyde de magnésium), du sulfate d'ammonium ((NH₄)₂SO₄) et du phosphate d'ammonium ((NH₄)₂PO₄), de l'EDAP (éthylènediaminephosphate), du GP (phosphate de guanidine) ou aussi des mélanges de ceux-ci.

13. Grille de ventilation selon l'une des revendications précédentes, **caractérisée en ce que** la composition contient une ou plusieurs matières auxiliaires, qui sont notamment sélectionnées parmi des additifs ayant un effet céramisant, des additifs ignifuges ayant un effet ablatif, des additifs ignifuges retardant la flamme, des additifs ignifuges intumescents complémentaires, des stabilisants, des pigments, des matériaux de remplissage, des plastifiants et/ou des fongicides.

14. Grille de ventilation selon l'une des revendications précédentes, **caractérisée en ce que** le matériau siliceux expansible est sélectionné parmi la vermiculite, le silicate de sodium et/ou de potassium, notamment du verre soluble de sodium et/ou de potassium.

15. Grille de ventilation selon l'une des revendications précédentes, **caractérisée en ce que** la composition contient 10 à 85 % en poids de l'agent actif moussant en cas d'incendie, notamment 20 à 50 % en poids, respectivement par rapport à la composition entière.

16. Grille de ventilation selon l'une des revendications précédentes, **caractérisée en ce que** la grille de ventilation comprend une gaine continue (7) et est conçue comme un corps rectangulaire ou cylindrique.

17. Grille de ventilation selon l'une des revendications précédentes, **caractérisée en ce que** la grille de ventilation comprend au moins un dispositif de liaison (8, 9, 10, 11), à l'aide duquel la grille de ventilation peut être reliée de manière modulaire à d'autres grilles de ventilation, le dispositif de liaison (8, 9, 10, 11) étant de préférence disposé sur le côté extérieur de la gaine (7).

18. Grille de ventilation selon la revendication 17, **caractérisée en ce que** le dispositif de liaison (8, 9, 10, 11) est une rainure (9, 10) ou un ressort (8, 11).

19. Grille de ventilation selon la revendication 18, **caractérisée en ce que** la rainure (9, 10) comprend une contre-dépouille (12, 13) et le ressort comprend une forme (14, 15) correspondant à celle-ci.

20. Grille de ventilation selon la revendication 18 ou la revendication 19,
**caractérisée en ce que** la rainure (9, 10) et le ressort (8, 11) s'effilent le long de leur direction longitudinale.

21. Grille de ventilation selon l'une des revendications 17 à 20, **caractérisée en ce que** le dispositif de liaison (8, 9, 10, 11) s'étend le long de l'extension longitudinale de la gaine (7).

22. Grille de ventilation selon l'une des revendications 17 à 21, **caractérisée en ce que** la grille de ventilation comprend quatre dispositifs de liaison (8, 9, 10, 11), qui sont disposés de sorte que la grille de ventilation peut être reliée de manière modulaire à quatre autres grilles de ventilation.

23. Grille de ventilation selon l'une des revendications précédentes, **caractérisée en ce qu'**au moins un moyen de couplage est attribué à la grille de ventilation, à l'aide duquel la grille de ventilation peut être reliée de manière modulaire à d'autres grilles de ventilation.

24. Grille de ventilation selon la revendication 23, **caractérisée en ce que** le moyen de couplage est conçu comme un ressort et/ou un clip.

25. Grille de ventilation selon l'une des revendications précédentes, **caractérisée en ce que** les nervures de grille (2, 3, 4, 5) d'une grille de ventilation comprennent au moins deux épaisseurs différentes et sont disposées pour former la grille de sorte que plusieurs nervures de grille (2, 4) adjacentes plus minces sont suivies par une ou plusieurs nervures de grille plus épaisses (3, 5).

26. Grille de ventilation selon l'une des revendications précédentes, **caractérisée en ce que** les nervures de grille (2, 3, 4, 5) forment une structure de grille croisée ou une structure alvéolaire, au moins dans plusieurs sections.

27. Grille de ventilation selon l'une des revendications précédentes, **caractérisée en ce que** la grille de ventilation peut être fabriquée par un moulage par injection.

28. Procédé de fabrication d'une grille de ventilation (1) destinée à empêcher le feu et la fumée de se propager d'une pièce à une autre pièce en cas d'incendie, comprenant les étapes suivantes de:
- fournir un moule, notamment un moule d'injection, ayant une pluralité de cavités pour mouler des nervures de grille (2, 3, 4, 5) se coupant de la grille de ventilation;
- introduire une composition liquide dans le moule, de préférence par injection, la composition contenant un matériau moussant en cas d'incendie, qui comprend du graphite expansé et/ou un matériau siliceux expansible et un polymère thermoplastique;
- laisser durcir la composition pour former une grille de ventilation;
- sortir la grille de ventilation du moule.

29. Procédé selon la revendication 28, **caractérisé en ce que** la composition, avant d'être introduite dans le moule, est produite à partir du matériau moussant en cas d'incendie et du polymère thermoplastique dans une étape de travail séparée, le polymère thermoplastique étant fondu et le matériau moussant en cas d'incendie ainsi que des matières auxiliaires, si désirées, étant mélangés avec la masse fondue.

30. Procédé selon la revendication 29, **caractérisé en ce que** la fusion et le mélange sont exécutés dans une extrudeuse.
